# EUROPÄISCHE PATENTSCHRIFT

(11) **EP 3 070 285 B1**
(45) Veröffentlichungstag und Bekanntmachung des Hinweises auf die Patenterteilung: **18.10.2017**
(21) Anmeldenummer: 15159743.2
(22) Anmeldetag: 18.03.2015
(51) Int. Cl.: F01N 3/20

(54) **Medienbehälter mit einem komprimierbaren Sicherungskörper als Volumenreservoir für den Fall einer Ausdehnung eines im Medienbehälter aufgenommenen Mediums**
Container with a compressible safety body as a volume reservoir for the expansion of a medium stored in the container
Récipient doté d'un corps de sécurité pouvant être comprimé en tant que volume de distension dans l'éventualité d'une dilatation d'un milieu disposé dans le récipient

(43) Veröffentlichungstag der Anmeldung: 21.09.2016
(73) Patentinhaber: Röchling Automotive SE & Co. KG, 68165 Mannheim (DE)
(72) Erfinder: Chini, Fabrizio, 38060 Isera (TN) (IT)
(74) Vertreter: RLTG

(56) Entgegenhaltungen:
- DE-A1- 3 125 463
- DE-A1-102007 041 524
- DE-A1-102009 029 375
- DE-A1-102010 010 528
- DE-A1-102010 029 254
- JP-A- 2010 151 050

## Beschreibung

Die vorliegende Erfindung betrifft einen Medienbehälter mit einem Sicherungskörper nach dem Oberbegriff des Anspruchs 1.

Derartige Medienbehälter sind beispielsweise aus der DE 10 2007 041 524 A1, der DE 10 2010 029 254 A1, der DE 10 2009 029 375 A1 und der DE 31 25 463 A1 bekannt und sind häufig in Kraftfahrzeugen eingesetzt. Durch den Betrieb des Kraftfahrzeugs sowie durch das Abstellen des Kraftfahrzeugs im Freien zu unterschiedlichen Jahreszeiten können Medienbehälter der eingangs genannten Art und damit verbunden ein in diesen aufgenommenes Medium erheblichen Temperaturschwankungen ausgesetzt sein. Verbunden mit derartigen Temperaturschwankungen ist in der Regel eine Dichteänderung des im Medienbehälter aufgenommenen und daher darin präsenten Mediums. Je nach thermischem Ausdehnungskoeffizient des jeweils im Medienbehälter präsenten Mediums ist mit einer Änderung der Mediumstemperatur eine Änderung des vom Medium eingenommenen Volumens verbunden. Da sich die Masse des in dem Medienbehälter aufgenommenen Mediums bei abgeschlossenem Behälter ohne Entnahme von Medium aus diesem Behälter und ohne Zugabe von weiterem Medium nicht ändert, wird durch eine entsprechende Dichteänderung, also einer Änderung des vom Medium eingenommenen Volumens bei ansonsten gleicher Masse, der Medienbehälter selbst mechanisch belastet.

Diese Belastung ist besonders hoch bei Phasenübergängen von flüssig zu fest des im Medienbehälter präsenten Mediums, wenn mit diesem Phasenübergang eine Dichteverringerung einher geht. Dies ist beispielsweise bei Wasser und wässrigen Lösungen der Fall. Hier kommt zu der auch im flüssigen Zustand auftretenden temperaturänderungsbedingten Dehnung des im Medienbehälter präsenten Mediums gravierend hinzu, dass das zu einem Festkörper erstarrte Medium nicht mehr fließen kann und somit die mechanische Belastung des Medienbehälters lokal am Ort der Benetzung des Medienbehälters mit erstarrtem Medium besonders hoch ist. Derartige Phasenübergänge können die genannten Medienbehälter zum Bersten bringen und somit ein völliges Bauteilversagen herbeiführen.

In vielen Fällen, wie etwa dem Kühlmittelkreislauf eines Kraftfahrzeugs, behilft man sich zur Vermeidung oder Linderung dieses Problems mit gefrierpunktsenkenden Additiven im Kühlwasser oder mit speziellen Kühlflüssigkeiten, deren Gefrierpunkt auf eine Temperatur abgesenkt ist, die am jeweiligen Standort des Fahrzeugs meteorologisch nicht zu erwarten ist.

Allerdings führen jüngste Technologien zum Einsatz neuer Medien an Kraftfahrzeugen, die - ähnlich dem Kraftstoff - beim Betrieb des Fahrzeugs stofflich umgewandelt werden, so dass es gerade auf die chemischen Eigenschaften dieser Medien ankommt. Dies verhindert etwa die Beimischung von Additiven, welche zu einer Verminderung oder gar Beseitigung der Brauchbarkeit der gewünschten Medien führen kann. Ein solches Medium ist beispielsweise eine wässrige Harnstofflösung, die bei Dieselfahrzeugen mit selektiver katalytischer Reduktion zum Einsatz kommt, um möglichst vorteilhafte Abgaswerte zu erzielen.

Es ist bereits aus dem Stand der Technik bekannt, in Wasser speichernden Behältern von Kraftfahrzeugen komprimierbare Gasräume vorzusehen, die im Falle des Gefrierens von Wasser durch die beim Gefrieren einsetzende Volumenzunahme und den damit verbundenen Druckanstieg im noch flüssigen Wasser komprimiert werden können. Diese bereits bekannten Sicherungskörper geben somit durch ihre Komprimierung Volumen frei, das von dem sich volumenmäßig ausdehnenden gefrierenden Wasser (Eis) eingenommen werden kann. Somit reduzieren die bekannten Sicherungskörper die im Falle eines Einfrierens auf den Medienbehälter wirkende mechanische Belastung.

Ein derartiger Medienbehälter mit Sicherungskörper ist beispielsweise bekannt aus der DE 454 339 A.

Aus dieser Druckschrift ist bekannt, Sicherungskörper in Form von gasumschließenden Kautschuck-Ballen oder in Form von geschäumten Kautschuck-Körpern an definierten Orten in einem Medienbehälter fest anzuordnen. Dabei ist aus dieser Druckschrift weiter bekannt, dass die Sicherungskörper an jenen Stellen angeordnet sein sollten, wo das Wasser beim Einfrieren am längsten flüssig bleibt, also dort, wo das Medium zuletzt gefriert.

Moderne Kraftfahrzeuge weisen auf geringstem Bauraum eine Vielzahl von Wärmequellen auf, die zu unterschiedlichen Zeiten und unter unterschiedlichen Bedingungen am Kraftfahrzeug in Betrieb sind, so dass es in modernen Fahrzeugen nicht oder nur mit sehr großer Unsicherheit vorhersagbar ist, wo ein in einem Medienbehälter aufgenommenes flüssiges Medium im Falle eines Einfrierens zuletzt erstarrt. Dieser Ort kann abhängig von vor dem Einfrieren aufgetretenen Betriebszuständen des Kraftfahrzeugs unterschiedlich sein.

Es ist Aufgabe der vorliegenden Erfindung, den Medienbehälter mit Sicherungskörper der eingangs genannten Art derart weiterzubilden, dass gewährleistet ist, dass der Sicherungskörper nach einer Komprimierung durch das im Medienbehälter präsente Medium wieder seine ursprüngliche Gestalt an- und damit sein ursprüngliches Volumen einnimmt.

Diese Aufgabe wird gelöst durch einen gattungsgemäßen Medienbehälter mit einem Sicherungskörper mit den Merkmalen des kennzeichnenden Teils von Anspruch 1.

Der Sicherungskörper eines Medienbehälters der vorliegenden Erfindung verbleibt unabhängig von der jeweiligen örtlichen Umgebung des Medienbehälters möglichst lange in einem flüssigen Bereich des im Medienbehälter aufgenommenen Mediums, wenn das Medium einen Phasenübergang von flüssig nach fest durchläuft. Durch die Relativbeweglichkeit des Sicherungskörpers zum Medienbehälter kann der Sicherungskörper im Medienaufnahmevolumen verlagert werden und kann so möglichst lange in einem flüssigen Bereich des im Medienbehälter präsenten Mediums verbleiben, selbst wenn dieses zu erstarren beginnt.

In der Abwägung zwischen der durch den Erstarrungsvorgang entstehenden Belastung einerseits sowie einer Belastung durch Anschlagen des relativbeweglichen Sicherungskörpers an die Innenseite des Medienbehälters andererseits ist bei den modernen verfügbaren Werkstoffen zur Herstellung von Medienbehälter und Sicherungskörper der Vermeidung der Belastung des Medienbehälters beim Erstarren des darin aufgenommenen Mediums unbedingt der Vorzug zu geben. Die durch ein Auftreffen des relativ zum Medienbehälter beweglichen Sicherungskörpers auf eine Innenseite des Medienbehälters auftretenden Kräfte sind um Größenordnungen geringer als die beim Erstarren eines flüssigen Mediums in dem Medienbehälter auf letzteren einwirkende Kraft, wenn der Sicherungskörper nicht möglichst lange im noch flüssigen Bereich des aufgenommenen Mediums verbleibt, sondern bereits zu Beginn des Erstarrungsvorgangs vom erstarrenden, also in der Regel gefrierenden, Medium eingeschlossen wird. Da der Sicherungskörper überdies nur im flüssigen Medium wirklich relativ zum Sicherungskörper beweglich ist, wird ein etwaiges Auftreffen des Sicherungskörpers auf die Innenseite des Medienbehälters durch das den Sicherungskörper wenigstens abschnittsweise umgebende Medium gedämpft.

Dabei kann es in einfachen Fällen ausreichen, wenn der Sicherungskörper im Medienaufnahmevolumen relativ zum Medienbehälter in nur eine Raumrichtung beweglich ist. Dies kann beispielsweise dadurch erreicht werden, dass der Sicherungskörper im Inneren eines Rohres längs der Rohrachse beweglich aufgenommen ist, wo seine Bewegungsfreiheit in Richtung der Rohrachse um ein Vielfaches größer ist als seine lediglich vernachlässigbare Beweglichkeit orthogonal hierzu. Eine Beweglichkeit orthogonal zur Rohrachse braucht dann nur gegeben zu sein, um unnötige Reibung zwischen Sicherungskörper und Rohrwand zu verhindern. Vorzugsweise ist eine solche Rohrwand durchbrochen oder aus Gittermaterial gebildet, um einen Medienaustausch zwischen dem Rohrinnenbereich und dem Rohraußenbereich zu ermöglichen. Alternativ kann der Sicherungskörper mittels einer in einer Raumrichtung beweglichen teleskopierbaren Stange mit dem Medienbehälter verbunden sein.

Ein verbesserte Möglichkeit, den Sicherungskörper im zuletzt erstarrenden Medienbehälter anzuordnen, kann dadurch gegeben sein, dass der Sicherungskörper in zwei zueinander orthogonalen Raumrichtungen relativ zum Medienbehälter beweglich ist. Dies kann beispielsweise dadurch erfolgen, dass der Sicherungskörper in einem flächigen Kasten aufgenommen ist, dessen lichte Weite in Dickenrichtung etwa der in der entsprechenden Richtung angeordneten Abmessung des Sicherungskörpers entspricht und dessen lichte Weiten orthogonal zu dieser kürzesten Abmessung wesentlich größer bemessen sind, so dass die beiden letztgenannten zueinander orthogonalen Raumrichtungen die tatsächlichen Bewegungsfreiheitsgrade des Sicherungskörpers im Medienbehälter definieren.

Ebenso kann der Sicherungskörper weiter vorteilhaft in drei paarweise zueinander orthogonalen Raumrichtungen relativ zum Medienbehälter beweglich sein. Im einfachsten Fall kann der Sicherungskörper lose in den Medienbehälter eingelegt sein. Ebenso kann jedoch seine Bewegungsfreiheit durch einen im Medienkörper vorgesehenen Kasten eingeschränkt sein, der jedoch in drei paarweise zueinander orthogonalen Raumrichtungen eine größere lichte Weite aufweist als die jeweilige in dieser Raumrichtung angeordnete Abmessung des Sicherungskörpers. Durch einen derartigen Kasten, der abschnittsweise auch durch eine Innenseite einer Medienbehälterwandung begrenzt sein kann, kann ein Auftreffen des Sicherungskörpers auf die Wandung des Medienbehälters im Betrieb verhindert oder lokal begrenzt sein. Der Kasten kann wiederum mit Durchbrechungen oder sogar als Gitterkasten ausgeführt sein, um seine Durchströmung mit Medium zu ermöglichen.

Wie bereits angedeutet wurde, kann der Sicherungskörper mit dem Medienbehälter unverbunden in diesen eingelegt sein. Alternativ kann der Sicherungskörper jedoch auch durch ein relativ zum Medienbehälter bewegliches Verbindungsmittel mit diesem verbunden sein, um zwar eine Relativbewegung des Sicherungskörpers relativ zum Medienbehälter zu ermöglichen, diese Bewegung dennoch wenigstens in gewisser Weise zu führen oder/und zu begrenzen.

Zwar kann der Sicherungskörper durch ein starres Verbindungsmittel mit dem Medienbehälter verbunden sein, welches lediglich relativbeweglich mit dem Sicherungskörper oder/und mit dem Medienbehälter verbunden ist. Allerdings schränkt dies die Beweglichkeit des Sicherungskörpers erheblich ein. Eine Verbindung eines Sicherungskörpers mit einer maximalgelenkig am Medienbehälter gelagerten starren Stange führt zu einer Relativbewegung des Sicherungskörpers auf einer Kugelkalottenoberfläche.

Ein höherer Relativbewegungsfreiheitsgrad des Sicherungskörpers kann dagegen dadurch erreicht werden, dass der Sicherungskörper mit dem Medienbehälter nur durch - verglichen mit der das Medienaufnahmevolumen einfassenden Wandung des Medienbehälters - weichelastische oder/und formlabile Verbindungsmittel mit dem Medienbehälter verbunden ist. "Weichelastisch" verglichen mit der das Medienaufnahmevolumen einfassenden Wandung des Medienbehälters bedeutet dabei, dass sich das Verbindungsmittel bei identischer einwirkender äußerer Kraft stärker verformt als die Wandung des Medienbehälters. Derartige Verbindungsmittel können beispielsweise Elastomerbänder, dünne Metalldrähte und dergleichen sein. Formlabile Verbindungsmittel sind solche, welche sich unter ihrer Eigenlast substantiell verformen, wie etwa Schnüre, Seile und dergleichen.

Die Federanordnung kann Metall umfassen, etwa in Form einer Schraubenfeder, einer Blattfeder und dergleichen. Ebenso kann die Federanordnung Kunststoff umfassen, bevorzugt Kunststoff auf Kautschuk-Basis, wie etwa natürlichen oder synthetischen Gummi, Silikon, Polyurethan und dergleichen. Derartige Kunststoffe auf Kautschuk-Basis sind in einem großen Lastbereich elastisch, d. h. sie verformen sich nach Fortfall einer äußeren Kraft im Wesentlichen in ihre ursprüngliche Gestalt zurück. Ein vernachlässigbares Verformungsresiduum (Hysterese) soll hier außer Acht gelassen werden. Ebenso kann zusätzlich oder alternativ die Federanordnung ein thermoplastisches Elastomer (TPE) umfassen. Der Vorteil von TPE liegt in seiner einfachen Urformbarkeit. TPE-Materialien können beispielsweise durch Spritzgießen in nahezu beliebige Gestalten geformt werden.

Die Federanordnung kann aus einem der zuvor genannten Materialien gebildet sein, oder kann ein solches Material umfassen, etwa in Kombination mit wenigstens einem anderen Material. So kann beispielsweise das Metall einer Federanordnung durch Kunststoff umschlossen sein, um Korrosion zu verhindern oder um es elektrisch oder/und chemisch zu isolieren, oder es kann Kunststoff in geschäumter Form vorliegen, um nicht nur die elastischen Materialeigenschaften des Kunststoffes, sondern auch die reversible Komprimierbarkeit von Gas für die Federanordnung auszunutzen.

Zur Definition eines vorbestimmten Volumenreservoirs ist es vorteilhaft, wenn der Sicherungskörper ein Gehäuse aufweist, welches ein Sicherungskörpervolumen umschließt. Grundsätzlich kann ein derartiges Gehäuse jedoch auch entfallen, etwa wenn der Sicherungskörper aus geschlossenzelligem geschäumtem Kunststoff gebildet ist. Da mit dem Gehäuse die Möglichkeit geschaffen wird, das von ihm umschlossene Sicherungskörpervolumen vor einem Einfluss, insbesondere chemischen Einfluss, des im Medienbehälter aufgenommenen Mediums zu schützen, ist bevorzugt die Federanordnung im Sicherungskörpervolumen vorgesehen.

Um sicherstellen zu können, dass der Sicherungskörper möglichst lange in einem Bereich des im Medienbehälter präsenten Medium angeordnet ist, in dem dieses Medium flüssig vorliegt, kann der Sicherungskörper eine Heizeinrichtung aufweisen. Vorzugsweise ist die Heizeinrichtung im vom Gehäuse umschlossenen Sicherungskörpervolumen vorgesehen, um die Heizeinrichtung nicht unmittelbar dem Kontakt mit dem im Medienbehälter präsenten Medium aussetzen zu müssen.

Die Heizeinrichtung kann eine konvektive Heizeinrichtung sein, beispielsweise, indem ein Hohlraum des Sicherungskörpers, etwa ein Hohlraum in einer Gehäusewandung des Sicherungskörpergehäuses, von einem temperierten Fluid gezielt durchströmt wird.

Konstruktiv einfacher herzustellen und damit kostengünstiger ist jedoch eine elektrische Widerstandsheizung. Diese kann durch Leiterbahnen aus Metall oder durch aufgedruckte Leiterbahnen aus elektrisch leitfähiger Tinte oder elektrisch leitfähigen Kunststoff und dergleichen gebildet sein. Vorzugsweise ist die elektrische Widerstandsheizeinrichtung an der zum Sicherungskörpervolumen weisenden Seite des Sicherungskörpergehäuses vorgesehen. Diese Seite ist bevorzugt von dem im Medienbehälter präsenten Medium nicht benetzt.

Wenngleich grundsätzlich daran gedacht sein kann, die Heizeinrichtung allgemein im Sicherungskörpervolumen vorzusehen, ist aus Gründen einer möglichst effektiven Wärmeübertragung vom Sicherungskörper zu dem ihn unmittelbar umgebenden Medium bevorzugt, dass die Heizeinrichtung an wenigstens einem Wandabschnitt des Gehäuses vorgesehen ist.

Um die Heizeinrichtung möglichst nicht mechanischen Belastungen durch eine Verformung des Sicherungskörpers bei dessen bestimmungsgemäßer Komprimierung auszusetzen, kann vorgesehen sein, dass das Gehäuse wenigstens einen weniger steifen Gehäuseabschnitt und wenigstens einen steiferen Gehäuseabschnitt aufweist, wobei die Heizeinrichtung an dem wenigstens einen steiferen Gehäuseabschnitt vorgesehen ist. Der steifere Gehäuseabschnitt kann durch Materialwahl oder/und Bauteilgestaltung steifer als der wenige steife Gehäuseabschnitt ausgebildet sein. Beispielsweise kann im steiferen Gehäuseabschnitt ein steiferer Kunststoff oder ein Metall vorgesehen sein, während der weniger steife Gehäuseabschnitt ein weniger steifes Material aufweist. Dabei ist vorrangig die Biegesteifigkeit von Bedeutung, wenngleich Zug- und Drucksteifigkeit Berücksichtigung finden sollen. Da jedoch sowohl Zug- als auch Drucksteifigkeit als auch Biegesteifigkeit jeweils vom Elastizitätsmodul des gewählten Materials abhängen, kann der steifere Gehäuseabschnitt allgemein durch ein Material mit höherem Elastizitätsmodul als der weniger steife Gehäuseabschnitt gebildet sein. Zusätzlich oder alternativ kann der steifere Gehäuseabschnitt dicker oder/und mit Versteifungsrippen oder/und mit sonstigen Versteifungsformationen ausgebildet sein.

Zur Versorgung der Heizeinrichtung für dessen Betrieb vorgesehene Versorgungsleitungen, also etwa Schläuche zur Versorgung der durchströmbaren Hohlräume einer konvektiven Heizeinrichtung mit Heizfluid oder Drähte zur Versorgung der elektrischen Widerstandsheizung mit elektrischem Strom, können Teil der zuvor genannten weichelastischen oder/und formlabilen Verbindungsmittel sein, mit welchen der Sicherungskörper mit dem Medienbehälter verbunden sein kann. So können beispielsweise elektrische Drähte - und zu solchen zählen im Sinne der vorliegenden Erfindung insbesondere mehrere Litzen umfassende Drähte - die Verbindungsmittel bilden, also einzige Verbindungsmittel des Sicherungskörpers mit dem Medienbehälter sein. Zur Abschirmung der elektrischen Drähte vor einem Einfluss des im Medienbehälter aufgenommenen Mediums können die Drähte in an sich bekannter Weise von einer Isolationsschicht umgeben sein.

Zur Erleichterung von Herstellung und Montage kann das Gehäuse mehrteilig sein. Um ein besonders großes von dem Sicherungskörpergehäuse umgebenes Sicherungskörpervolumen reservieren zu können, in dem Bauteile aufgenommen sein können, ist bevorzugt, zur Bildung des Gehäuses eine Mehrzahl von Gehäuseschalenbauteilen zu verwenden, wobei zwei Gehäuseschalenbauteile zur Bildung eines Gehäuses vorteilhaft ausreichen. Um die Montage noch weiter zu erleichtern, können die Gehäuseschalenbauteile Gleichteile aufweisen oder sogar Gleichteile sein. Dann, wenn das Gehäuse die bevorzugten Gehäuseschalenbauteile umfasst, kann zu deren erleichterter Montage zu einem Sicherungskörpergehäuse ein jedes von diesen Gehäuseschalenbauteilen einen Flanschabschnitt zur Verbindung mit einem anderen Gehäuseschalenbauteil, einen weniger steifen Verformungs-Schalenabschnitt und einen steiferen Stabilitäts-Schalenabschnitt aufweisen, wobei der Verformungs-Schalenabschnitt von den genannten Abschnitten bevorzugt die geringste Verformungssteifigkeit aufweist.

Um eine möglichst verformungsfreie Relativbewegung des Stabilitäts-Schalenabschnitts bei der Komprimierung des Sicherungskörpers gewährleisten zu können, ist es bevorzugt, dass der Verformungs-Schalenabschnitt zwischen dem Flanschabschnitt und dem Stabilitäts-Schalenabschnitt vorgesehen ist. Der Stabilitäts-Schalenabschnitt trägt bevorzugt die oben genannte Heizeinrichtung, sofern diese vorhanden ist.

Beispielsweise kann ein Gehäuseschalenbauteil kegelstumpfförmig oder allgemein sich vom Flanschabschnitt weg verjüngend ausgebildet sein.

Die vorliegende Erfindung betrifft aufgrund der bevorzugten Eignung des oben genannten Medienbehälters mit Sicherungskörper auch eine SCR-Vorrichtung zur selektiven katalytischen Reduktion von Verbrennungsabgasen, umfassend einen Katalysator und einen Medienbehälter mit Sicherungskörper, vorzugsweise der Medienbehälter wenigstens teilweise gefüllt mit einer harnstoffhaltigen Flüssigkeit.

Die vorliegende Erfindung wird nachfolgend näher erläutert anhand der beiliegenden Zeichnungen. Es stellt dar:

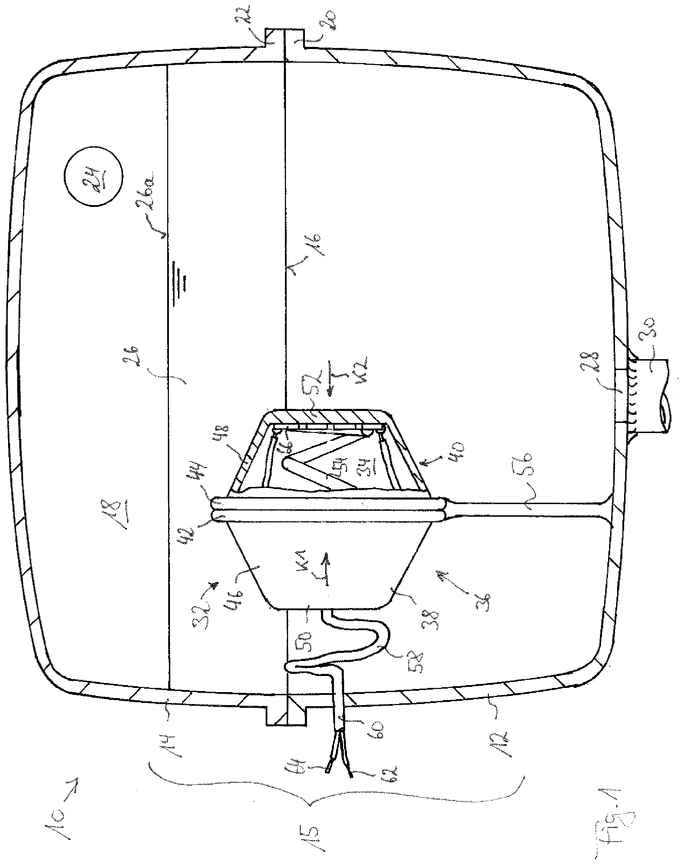

- Figur 1: eine Querschnittsansicht einer erfindungsgemäßen Ausführungsform eines Medienbehälters mit einem Sicherungskörper in seinem Medienaufnahmevolumen.

In Figur 1 ist eine erfindungsgemäße bevorzugte Ausführungsform eines Medienbehälters allgemein mit 10 bezeichnet. Der Medienbehälter 10 kann eine Mehrzahl von Behälterbauteilen umfassen, hier: Behälterunterschale 12 und Behälteroberschale 14, welche längs einer Fügefläche 16, hier: Fügeebene 16, miteinander verbunden sind, um ein Medienaufnahmevolumen 18 im Inneren des Medienbehälters 10 umschließend zu definieren.

Die Fügefläche 16 kann durch Flanschausbildungen 20 bzw. 22 an der Behälterunterschale 12 bzw. an der Behälteroberschale 14 definiert sein. Die beiden Behälterschalen 12 und 14 können an den im fertig montierten Zustand aufeinander zu weisenden Flächen der Flanschausbildungen 20 und 22 miteinander gefügt, insbesondere geklebt sein. Es soll auch nicht ausgeschlossen sein, dass die beiden Behälterschalen 12 und 14 lösbar unter Zwischenanordnung einer Dichtung miteinander verbunden sind.

In der Querschnittsansicht von Figur 1 ist im rechten oberen Bereich des Medienaufnahmevolumens 18 in einer das Medienaufnahmevolumen 18 einfassenden Wandung eine Öffnung 24 ausgebildet, an die von außen eine hier nicht weiter interessierende und daher in Figur 1 nicht dargestellte Befüllungsleitung zur Einleitung eines Mediums 26 in das Medienaufnahmevolumen 18 angeschlossen ist.

An einem im fertig montierten Zustand des Medienbehälters 10 in Schwerkraftwirkungsrichtung möglichst tief gelegenen Ort ist in der Behälterwandung eine Auslassöffnung 28 vorgesehen, an die eine Entnahmeleitung 30 angeschlossen ist. Die Entnahmeleitung 30 kann beispielsweise mit einer Pumpe verbunden sein, um Medium 26 aus dem Medienaufnahmevolumen 18 zu entnehmen und seiner weiteren Verwendung zuzuführen.

Als Medium 26 sei hier beispielhaft an eine wässrige Harnstofflösung gedacht, wie sie bei SCR-Systemen in Kraftfahrzeugen zur selektiven katalytischen Reduktion von Verbrennungsabgasen verwendet werden. In dem in Figur 1 dargestellten Beispiel befindet sich der Flüssigkeitsspiegel 26a des Mediums 26 an der bezeichneten Stelle.

Für einen überwiegenden Zeitanteil der Aufenthaltsdauer des Mediums 26 im Medienaufnahmevolumen 18 liegt dieses in flüssiger Phase vor. In Zeiten sehr kalter Außentemperaturen, die den Medienbehälter 10 umgeben können, droht jedoch die Gefahr, dass das Medium 26 im Medienbehälter 10 in eine feste Phase übergeht und zu einem Festkörper erstarrt.

Gerade bei wässrigen Lösungen ist mit der Erstarrung in die feste Phase eine Volumenausdehnung verbunden, die den Medienbehälter 10 ohne Weiteres beschädigen oder gar zerstören kann. Der häufig an anderer Stelle in der Kraftfahrzeugtechnik gewählte Lösungsweg, eine wässriges Medium mit erstarrungstemperatursenkenden Additiven zu vermischen, ist vorliegend nicht gegeben, da das Medium 26 zur Stoffumwandlung und damit in seiner chemischen Eigenschaft benötigt wird. Diese könnte durch die zuvor genannten Additive in unerwünschter Weise verändert werden.

Um also der Volumenausdehnung des Mediums 26 bei dessen etwaiger Erstarrung Raum zur unvermeidlichen Volumenausdehnung bereitstellen zu können und hierdurch im Erstarrungsfall die Behälterschalen 12 und 14 bzw. allgemein ein Behältergehäuse 15 vom Druck des sich bei der Erstarrung ausdehnenden Mediums 26 entlasten zu können, ist im Medienaufnahmevolumen 18 ein komprimierbarer Sicherungskörper 32 vorgesehen.

Der Sicherungskörper 32 ist im dargestellten bevorzugten Fall teilweise mit Gas 34 gefüllt, welches durch ein Körpergehäuse 36 vorzugsweise gasdicht umschlossen ist.

Das Körpergehäuse 36 kann aus einer Mehrzahl von schalenförmigen Gehäuseschalenbauteilen gebildet sein. Im dargestellten Beispiel sind bevorzugt zwei Gehäuseschalenbauteile 38 und 40 zur Bildung des Körpergehäuses 36 verwendet, welche zur fertigungstechnischen Erleichterung bevorzugt als Gleichteile ausgebildet sind.

Jedes der Gehäuseschalenbauteile 38 und 40 weist bevorzugt zur Verbindung mit einem jeweils anderen Gehäuseschalenbauteil einen Flanschabschnitt 42 bzw. 44 auf. Die Gehäuseschalenbauteile 38 und 40 können an aufeinander zu weisenden Flanschflächen der Flanschabschnitte 42 und 44 miteinander verklebt oder lösbar miteinander verklammert, verschraubt oder sonstwie gefügt sein. Eine Zwischenanordnung eines Dichtungsbauteils zwischen den beiden Flanschabschnitten 42 und 44 ist zur Abdichtung des Inneren des Sicherungskörpers 32 gegen einen Eintritt von Medium 26 möglich.

In Figur 1 ist der Sicherungskörper 32 in seiner nicht-komprimierten Gestalt gezeigt, welche der Sicherungskörper bei einer Bezugstemperatur aufweist, bei welcher das Medium 26 in flüssiger Phase vorliegt. Die Bezugstemperatur kann beispielsweise 20°C betragen, stets unter der Annahme eines auf das Medium 26 im Medienaufnahmevolumen 18 einwirkenden Atmosphärendrucks von 1013 Millibar.

Die Gehäuseschalenbauteile 38 und 40 weisen bevorzugt jeweils einen Verformungs-Schalenabschnitt 46 bzw. 48 und einen Stabilitäts-Schalenabschnitt 50 bzw. 52 auf.

Im vorliegenden Beispiel sind die Gehäuseschalenbauteile 36 und 40 kegelstumpfförmig ausgebildet, wenngleich dies nicht so sein muss. Es sind auch zylindrische, kugelkalottenförmige, kegelförmige und sonstige Gehäuseschalenbauteile denkbar. Im dargestellten Beispiel ist der Stabilitäts-Schalenabschnitt 50 bzw. 52 vorzugsweise eben ausgebildet, so dass er sich zur Aufnahme einer weiter unten beschriebenen Heizeinrichtung besonders gut eignet. Bevorzugt liegt der Stabilitäts-Schalenabschitt 50 bzw. 52 vom jeweils zugeordneten Flanschabschnitt 42 bzw. 44 entfernt am jeweils anderen Endbereich des Gehäuseschalenbauteils 38 bzw. 40. Der Vorformungs-Schalenabschnitt 46 bzw. 48 liegt vorteilhafterweise zwischen dem jeweiligen Flanschabschnitt 42 bzw. 44 und dem Stabilitäts-Schalenabschnitt 50 und 52 eines jeweiligen Schalenbauteils 38 bzw. 40. Im vorliegenden Beispiel sind daher die Verformungs-Schalenabschnitte 46 bzw. 48 Mantelflächenabschnitte der kegelstumpfförmigen Gehäuseschalenbauteile 38 und 40, die Stabilitäts-Schalenabschnitte sind Stirnflächenabschnitte derselben.

Damit die Stabilitäts-Schalenabschnitte 50 und 52 sich unter Angriff einer äußeren Belastung weniger stark verformen als die Verformungs-Schalenabschnitte 46 und 48, können erstere mit größerer Materialdicke als letztere ausgebildet sein. Alternativ oder zusätzlich können die Stabilitäts-Schalenabschnitte 50 und 52 mit formstabilisierenden Formationen ausgebildet sein, etwa mit Versteifungsrippen und dergleichen. Ebenso kann daran gedacht sein, dass die Stabilitäts-Schalenabschnitte 50 und 52 alternativ oder zusätzlich ein anderes Material mit größerem Elastizitätsmodul als die Verformungs-Schalenabschnitte 46 und 48 umfassen.

Im Falle einer Erhöhung des Drucks in dem den Sicherungskörper 32 außen umgebenden Medium 26 kann der Sicherungskörper 32 komprimiert werden, indem die Stabilitäts-Schalenabschnitte 50 und 52 unter hauptsächlicher Verformung der Verformungs-Schalenabschnitte 46 und 48 aufeinander zu bewegt werden (siehe Pfeile K1 und K2).

Durch die Verformung des Sicherungskörpers 32 wird das von den Gehäuseschalenbauteilen 38 und 40 umschlossene Körpervolumen verringert, wodurch das im Sicherungskörper 32 eingeschlossene Gas 34 komprimiert wird.

Im Falle eines Fortfalls der äußeren Belastung, etwa durch Übergang des Mediums 26 im Medienbehälter 10 zurück in die flüssige Phase, kann das komprimierte Gas 34 für eine Rückverformung des Sicherungskörpers 32 in den in Figur 1 gezeigten Ausgangszustand sorgen.

Erfindungsgemäß ist im Sicherungskörper 32 eine Festkörper-Federanordnung 54 vorgesehen, etwa - wie in Figur 1 beispielhaft dargestellt - in Form einer Schraubenfeder 54. Die Schraubenfeder 54 kann aus Metall sein, ist aus den unten genannten Gründen jedoch bevorzugt aus Kunststoff hergestellt oder mit Kunststoff ummantelt. Es handelt sich bei der beispielhaft dargestellten Schraubenfeder 54 um eine Schraubendruckfeder, welche ausgehend von ihrem in Figur 1 gezeigten Bereitschaftsszustand im Falle eines sich im Medium 26 erhöhenden Drucks unter Verkürzung ihrer Federlänge bei der Verformung des Sicherungskörpers 32 gegen ihre Federkraft zusammengedrückt wird.

Der Sicherungskörper 32 kann sich im Wesentlichen frei im Medienaufnahmevolumen 18 bewegen. Seine Bewegungsfreiheit ist lediglich eingeschränkt durch ein erstes Verbindungsmittel 56, welches beispielsweise vom Boden des Medienbehälters 10 zum Sicherungskörper 32 reichen kann, sowie durch ein zweites Verbindungsmittel 58, welches beispielsweise von der Seite des Medienbehälters 10 zum Sicherungskörper 32 reichen kann.

Das erste Verbindungsmittel 56 kann ein formlabiler, weichelastischer Elastomerstreifen aus einem Kautschuk-Material oder aus einem thermoplastisehen Elastomer und dergleichen sein. Das Material des ersten Verbindungsmittels kann zur Erleichterung der Fertigung und Montage mit dem Material eines oder beider der Gehäuseschalenbauteile 38 und 48 kompatibel oder sogar identisch sein.

In dem in Figur 1 dargestellten Beispiel ist das erste Verbindungsmittel 56 aufgrund des auf den Sicherungskörper 32 wirkenden Auftriebs gedehnt dargestellt.

Das zweite Verbindungsmittel 58 kann eine formlabile elektrische Leitung sein, welche die Wandung des Medienbehälters 10 nach außen durchsetzt und welche das Gehäuseschalenbauteil 38 ins Innere des Sicherungskörpers 32 durchsetzt. Beide Durchsetzungsstellen sind in an sich bekannter Weise gegen Mediendurchtritt abgedichtet.

Das zweite Verbindungsmittel 58 kann einen Isolationsschlauch 60 mit zwei darin geführten elektrisch leitfähigen Drähten 62 und 64 umfassen, welche jeweils wieder eine isolierende Umhüllung aufweisen können.

Die elektrische Leitung des zweiten Verbindungsmittels 58 dient zur Versorgung einer elektrischen Widerstandsheizeinrichtung 66, welche am Sicherungskörper 32 vorgesehen sein kann, beispielsweise auf der Innenseite der Stabilitäts-Schalenabschnitte 50 und 52, mit elektrischer Energie. Die Heizeinrichtung 66 kann gebildet sein durch eine elektrisch leitfähige Mäanderleitung mit geringem Querschnitt und hohem elektrischem Widerstand. Auf der elektrischen Widerstandsheizeinrichtung 66 kann sich die Schraubenfeder 54 abstützen, die zur Vermeidung eines Kurzschlusses in der elektrischen Heizeinrichtung 66 - wie oben bereits bemerkt - vorzugsweise aus Kunststoff, gemeint ist: elektrisch nicht leitendem Kunststoff, gebildet ist oder wenigstens an ihrem auf der elektrischen Heizeinrichtung 66 aufliegenden Ende eine derartige elektrisch nicht leitende Beschichtung trägt.

Aufgrund der im Wesentlichen freien, im Beispiel der Figur 1 lediglich durch die Verbindungsmittel 56 und 58 eingeschränkten Beweglichkeit des Sicherungskörpers 32 im Medienaufnahmevolumen 18 kann der Sicherungskörper passiv einer im Medium 26 fortschreitenden Erstarrungsfront ausweichen, so dass sich der Sicherungskörper 32 im Falle einer Erstarrung des Mediums 26 im Medienbehälter 10 möglichst lang in einem Bereich befindet, in welchem das Medium 26 noch flüssig vorliegt. Je länger sich der Sicherungskörper 32 bei erstarrendem Medium 26 noch in flüssigen Medienbereichen befindet, desto besser kann das durch den Sicherungskörper 32 bereitgestellte Volumenreservoir durch Komprimierung des Sicherungskörpers 32 ausgenutzt werden.

Um sicherzustellen, dass der Sicherungskörper 32 möglichst lange in Bereichen mit flüssigem Medium 26 angeordnet ist, ist die oben genannte Heizeinrichtung 66 vorgesehen, durch welche der Sicherungskörper 32 und seine unmittelbare Medienumgebung mit Wärmeenergie versorgt werden können, so dass ein ansonsten unvermeidlicher Erstarrungsprozess im Inneren des Medienbehälters 10 wenigstens so geführt werden kann, dass der Sicherungskörper 32 seine Aufgabe einer Bereitstellung von Volumen für das sich bei der Erstarrung ausdehnende Medium 26 möglichst vollständig und somit möglichst lange erfüllen kann. Die Heizeinrichtung 66 sorgt somit dafür, dass der Sicherungskörper 32 in einem gar nicht oder wenigstens zuletzt erstarrenden Bereich des Mediums 26 vorliegt.

Mit der hier vorgestellten Konstruktion kann die bei einer Volumenausdehnung des Mediums 26 im Inneren des Medienbehälters 10 auf diesen einwirkende Belastung erheblich reduziert und somit eine Beschädigung oder gar Zerstörung des Medienbehälters 10 vermieden werden.

## Patentansprüche

1. Medienbehälter (10) mit einem Medienaufnahmevolumen (18) zur Aufnahme eines Mediums (26), welches während der Dauer seiner Präsenz im Medienbehälter (10) wenigstens vorübergehend in flüssiger Phase vorliegt, umfassend einen im Medienaufnahmevolumen (18) vorgesehenen komprimierbaren Sicherungskörper (32) als Volumenreservoir im Falle einer Dichteänderung, insbesondere als Folge eines Phasenübergangs, des im Medienbehälter (10) aufgenommenen Mediums (26), wobei der Sicherungskörper (32) relativ zum Medienbehälter (10) beweglich im Medienaufnahmevolumen (18) vorgesehen ist,
**dadurch gekennzeichnet, dass** der Sicherungskörper (32) eine Festkörper-Federanordnung (54) umfasst, welche gegen ihre Federkraft durch eine äußere Kraft aus einer ersten, raumgreifenderen Betriebsgestalt in eine zweite, weniger raumgreifende Betriebsgestalt verformbar ist, und welche sich bei Fortfall der Wirkung der äußeren Kraft im Wesentlichen in ihre erste Betriebsgestalt zurück verformt.

2. Medienbehälter mit Sicherungskörper nach Anspruch 1,
**dadurch gekennzeichnet, dass** der Sicherungskörper (32) im Medienaufnahmevolumen (18) relativ zum Medienbehälter (10) in einer Raumrichtung, vorzugsweise in zwei zueinander orthogonalen, besonders bevorzugt in drei paarweise zueinander orthogonalen Raumrichtungen beweglich ist.

3. Medienbehälter mit Sicherungskörper nach Anspruch 2,
**dadurch gekennzeichnet, dass** der Sicherungskörper (32) mit dem Medienbehälter (10) unverbunden oder nur durch ein relativ zum Medienbehälter (10) bewegliches Verbindungsmittel (56, 58) mit diesem verbunden ist.

4. Medienbehälter mit Sicherungskörper nach Anspruch 3,
**dadurch gekennzeichnet, dass** der Sicherungskörper (32) mit dem Medienbehälter (10) nur durch - verglichen mit der das Medienaufnahmevolumen (18) einfassenden Wandung des Medienbehälters (10) - weichelastische oder/und formlabile Verbindungsmittel (56, 58) verbunden ist.

5. Medienbehälter mit Sicherungskörper nach einem der vorhergehenden Ansprüche,
**dadurch gekennzeichnet, dass** die Federanordnung (54) Metall oder/und Kunststoff oder/und ein thermoplastisches Elastomer umfasst oder aus einem zu einer der genannten Werkstoffklassen gehörenden Werkstoff gebildet ist.

6. Medienbehälter mit Sicherungskörper nach einem der vorhergehenden Ansprüche,
**dadurch gekennzeichnet, dass** der Sicherungskörper (32) ein ein Sicherungskörpervolumen umschließendes Gehäuse (36) aufweist, wobei bevorzugt die Federanordnung (54) im Sicherungskörpervolumen vorgesehen ist.

7. Medienbehälter mit Sicherungskörper nach einem der vorhergehenden Ansprüche,
**dadurch gekennzeichnet, dass** der Sicherungskörper (32) eine Heizeinrichtung (66), insbesondere eine elektrische Widerstands-Heizeinrichtung (66), aufweist.

8. Medienbehälter mit Sicherungskörper nach den Ansprüchen 6 und 7,
**dadurch gekennzeichnet, dass** die Heizeinrichtung (66) an wenigstens einem Wandabschnitt des Gehäuses (36) vorgesehen ist.

9. Medienbehälter mit Sicherungskörper nach Anspruch 8,
**dadurch gekennzeichnet, dass** das Gehäuse (36) wenigstens einen weniger steifen Gehäuseabschnitt (46, 48) und wenigstens einen steiferen Gehäuseabschnitt (50, 52) aufweist, wobei die Heizeinrichtung (66) an dem wenigstens einen steiferen Gehäuseabschnitt (50, 52) vorgesehen ist.

10. Medienbehälter mit Sicherungskörper nach einem der Ansprüche 7 bis 9, jeweils unter Einbeziehung des Anspruchs 4,
**dadurch gekennzeichnet, dass** Versorgungsleitungen (60) zum Betrieb der Heizeinrichtung (66) wenigstens Teil der weichelastischen oder/und formlabilen Verbindungsmittel (56, 58) sind, vorzugsweise derartige Verbindungsmittel (56, 58) bilden.

11. Medienbehälter mit Sicherungskörper nach einem der vorhergehenden Ansprüche, unter Einbeziehung des Anspruchs 6,
**dadurch gekennzeichnet, dass** das Gehäuse (36) mehrteilig ist, vorzugsweise unter Verwendung einer Mehrzahl von Gehäuseschalenbauteilen (38, 40), insbesondere zwei Gehäuseschalenbauteile (38, 40), wobei bevorzugt die Gehäuseschalenbauteile (38, 40) Gleichteile aufweisen oder sind.

12. Medienbehälter mit Sicherungskörper nach Anspruch 11,
**dadurch gekennzeichnet, dass** das Gehäuse (36) Gehäuseschalenbauteile (38, 40) umfasst, von welchen jedes einen Flanschabschnitt (42, 44) zur Verbindung mit einem anderen Gehäuseschalenbauteil (38, 40), einen weniger steifen Verformungs-Schalenabschnitt (46, 48) und einen steiferen Stabilitäts-Schalenabschnitt (50, 52) aufweist, wobei der Verformungs-Schalenabschnitt (46, 48) von den genannten Abschnitten die geringste Verformungssteifigkeit aufweist.

13. Medienbehälter mit Sicherungskörper nach Anspruch 12,
**dadurch gekennzeichnet, dass** der Verformungs-Schalenabschnitt (46, 48) zwischen dem Flanschabschnitt (42, 44) und dem Stabilitäts-Schalenabschnitt (50, 52) vorgesehen ist.

14. SCR-Vorrichtung zur selektiven katalytischen Reduktion von Verbrennungsabgasen, umfassend einen Katalysator und einen Medienbehälter (10) mit Sicherungskörper (32) nach einem der vorhergehenden Ansprüche, vorzugsweise der Medienbehälter (10) wenigstens teilweise gefüllt mit einer harnstoffhaltigen Flüssigkeit.

## Claims

1. Media container (10) with a media receiving volume (18) for receiving a medium (26) which during its presence in the media container (10) is at least temporarily present in a liquid phase, comprising a compressible safety body (32) provided in the media receiving volume (18) as a volume reservoir in case of a change in density, in particular following a phase transition, of the medium (26) received in the media container (10), wherein the safety body (32) is in the media receiving volume (18) provided moveable in relation to the media container (10),
**characterized in that** the safety body (32) comprises a solid body spring arrangement (54) which is deformable against its spring force by an external force from a first extended shape to a second less extended shape and which substantially comes back to its original shape when the effect of the external force disappears.

2. Media container with a safety body according to claim 1,
**characterized in that** the safety body (32) is moveable inside the media receiving volume (18) in relation to the media container (10) in one spatial direction, preferably in two orthogonal spatial directions, particularly preferred in three mutually orthogonal spatial directions.

3. Media container with a safety body according to claim 2,
**characterized in that** the safety body (32) is not connected to the media container (10) or is only connected to the media container (10) via a connecting means (56, 58) which is moveable in relation to the media container (10).

4. Media container with a safety body according to claim 3,
**characterized in that** the safety body (32) is connected to the media container (10) only via softelastic or/and flexible connecting means (56, 58) - when compared to the wall of the media container (10) defining the media receiving volume (18).

5. Media container with a safety body according to one of the preceding claims, **characterized in that** the spring arrangement (54) comprises metal or/and plastic material or/and a thermoplastic elastomer or is made of a material of one of the above mentioned material classes.

6. Media container with a safety body according to one of the preceding claims, **characterized in that** the safety body (32) comprises a housing (36) enclosing a safety body volume, wherein the spring arrangement (54) is preferably provided inside the safety body volume.

7. Media container with a safety body according to one of the preceding claims, **characterized in that** the safety body (32) comprises a heating device (66), in particular an electric resistance heating device (66).

8. Media container with a safety body according to claims 6 and 7, **characterized in that** the heating device (66) is provided at at least one wall section of the housing (36).

9. Media container with a safety body according to claim 8,
**characterized in that** the housing (36) comprises at least one less stiff housing section (46, 48) and at least one stiff housing section (50, 52), wherein the heating device (66) is provided at the at least one stiffer housing section (50, 52).

10. Media container with a safety body according to one of claims 7 to 9, in each case including claim 4,
**characterized in that** supply lines (60) for operating the heating device (66) are at least part of the softelastic or/and flexible connecting means (56, 58), preferably form such connecting means (56, 58).

11. Media container with a safety body according to one of the preceding claims, in each case including claim 6,
**characterized in that** the housing (36) has several parts, preferably using a plurality of housing shell components (38, 40), in particular two housing shell components (38, 40), wherein preferably the housing shell components (38, 40) are or comprise same parts.

12. Media container with a safety body according to claim 11,
**characterized in that** the housing (36) comprises housing shell components (38, 40), each of which comprises a flange portion (42, 44) for connection with another housing shell component (38, 40), a less stiff deformation shell section (46, 48) and a stiffer stability shell section (50, 52), wherein the deformation shell section (46, 48) has the smallest deformation stiffness among the above mentioned sections.

13. Media container with a safety body according to claim 12,
**characterized in that** the deformation shell section (46, 48) is provided between the flange portion (42, 44) and the stability shell section (50, 52).

14. SCR device for the selective catalytic reduction of combustion exhaust gases, comprising a catalyser and a media container (10) with a safety body (32) according to one of the preceding claims, wherein the media container (10) is preferably at least partially filled with a urea-containing liquid.

## Revendications

1. Conteneur de milieu (10) avec un volume de réception de milieu (18) pour recevoir un milieu (26) qui durant sa présence dans le conteneur de milieu (10) est au moins temporairement présent sous forme de phase liquide, comprenant un corps de sécurité (32) compressible prévu dans le volume de réception de milieu (18) comme réservoir de volume dans le cas d'un changement de la densité, en particulier comme résultat d'une transition de phase, du milieu (26) reçu dans le conteneur de milieu (10), le corps de sécurité (32) étant prévu dans le volume de réception de milieu (18) de façon mobile par rapport au conteneur de milieu (10),
**caractérisé en ce que** le corps de sécurité (32) comprend un arrangement de ressorts de corps solide (54) qui peut être déformé contre sa force élastique par une force extérieure d'une première forme opératoire plus spacieuse à une deuxième forme opératoire moins spacieuse est qui, lors de la disparition de l'effet de la force extérieure, retourne essentiellement à sa première forme opératoire.

2. Conteneur de milieu avec un corps de sécurité selon la revendication 1,
**caractérisé en ce que** le corps de sécurité (32) est mobile dans le volume de réception de milieu (18) par rapport au conteneur de milieu (10) dans un sens spatiale, de préférence dans deux sens spatiaux orthogonaux, de manière particulièrement préférée dans trois sens spatiaux orthogonaux en pairs.

3. Conteneur de milieu avec un corps de sécurité selon la revendication 2, **caractérisé en ce que** le corps de sécurité (32) n'est pas connecté au conteneur de milieu (10) ou est connecté au conteneur de milieu (10) seulement par un moyen de connexion (56, 58) mobile par rapport au conteneur de milieu (10).

4. Conteneur de milieu avec un corps de sécurité selon la revendication 3,
**caractérisé en ce que** le corps de sécurité (32) n'est connecté au conteneur de milieu (10) que par des moyens de connexion (56, 58) souples et élastiques ou/et de forme instable - comparé à la paroi du conteneur de milieu (10) définissant le volume de réception de milieu (18).

5. Conteneur de milieu avec un corps de sécurité selon une des revendications précédentes,
**caractérisé en ce que** l'arrangement de ressorts (54) comprend du métal ou/et du plastique ou/et un élastomère thermoplastique ou est formé par un matériau d'une des classes de matériau sus-mentionnées.

6. Conteneur de milieu avec un corps de sécurité selon une des revendications précédentes,
**caractérisé en ce que** le corps de sécurité (32) comprend un boîtier (36) entourant un volume de corps de sécurité, où de préférence l'arrangement de ressorts (54) est prévu dans le volume de corps de sécurité.

7. Conteneur de milieu avec un corps de sécurité selon une des revendications précédentes,
**caractérisé en ce que** le corps de sécurité (32) comprend un dispositif de chauffage (66), en particulier un dispositif de chauffage de résistance (66).

8. Conteneur de milieu avec un corps de sécurité selon les revendications 6 et 7, **caractérisé en ce que** le dispositif de chauffage (66) est prévu à au moins une section de paroi du boîtier (36).

9. Conteneur de milieu avec un corps de sécurité selon la revendication 8,
**caractérisé en ce que** le boîtier (36) comprend au moins une section de boîtier moins rigide (46, 48) et au moins une section de boîtier plus rigide (50, 52), le dispositif de chauffage (66) étant prévu à ladite au moins une section de boîtier plus rigide (50, 52).

10. Conteneur de milieu avec un corps de sécurité selon une des revendications 7 à 9, respectivement en tenant compte de la revendication 4,
**caractérisé en ce que** des conduits d'alimentation (60) pour opérer le dispositif de chauffage (66) font au moins partie des moyens de connexion (56, 58) souples et élastiques ou/et de forme instable et forment de préférence de tels moyens de connexion (56, 58).

11. Conteneur de milieu avec un corps de sécurité selon une des revendications précédentes, en tenant compte de la revendication 6,
**caractérisé en ce que** le boîtier (36) a plusieurs parties, de préférence en utilisant une pluralité de composants de coquille de boîtier (38, 40), en particulier deux composants de coquille de boîtier (38, 40), où de préférence les composants de coquille de boîtier (38, 40) comprennent ou sont des composants invariants.

12. Conteneur de milieu avec un corps de sécurité selon la revendication 11,
**caractérisé en ce que** le boîtier (36) comprend des composants de coquille de boîtier (38, 40), dont chacun comprend une section de flasque (42, 44) pour la connexion avec un autre composant de coquille de boîtier (38, 40), une section de coquille de déformation moins rigide (46, 48) et une section de coquille de déformation plus rigide (50, 52), la section de coquille de déformation (46, 48) ayant la résistance à la déformation la plus faible desdites sections.

13. Conteneur de milieu avec un corps de sécurité selon la revendication 12,
**caractérisé en ce que** la section de coquille de déformation (46, 48) est prévue entre la section de flasque (42, 44) et la section de coquille de stabilité (50, 52).

14. Dispositif SCR pour la réduction sélective catalytique de gaz d'échappement, comprenant un catalyseur et un conteneur de milieu (10) avec un corps de sécurité (32) selon une des revendications précédentes, le conteneur de milieu (10) étant de préférence au moins en partie rempli par un liquide comprenant de l'urée.
